# EUROPÄISCHE PATENTSCHRIFT

(11) **EP 2 638 551 B1**
(45) Veröffentlichungstag und Bekanntmachung des Hinweises auf die Patenterteilung: **13.08.2014**
(21) Anmeldenummer: 11769814.2
(22) Anmeldetag: 21.09.2011
(51) Int. Cl.: H01G 4/12, B60L 11/00

(54) **VERFAHREN ZUR HERSTELLUNG EINES KAPAZITIVEN SPEICHERELEMENTS**
METHOD FOR PRODUCTION OF A CAPACITIVE STORAGE ELEMENT
PROCÉDÉ DE FABRICATION D'UN ÉLÉMENT MÉMOIRE CAPACITIF

(30) Priorität: 11.11.2010 DE 102010043748
(43) Veröffentlichungstag der Anmeldung: 18.09.2013
(73) Patentinhaber: Robert Bosch GmbH, 70442 Stuttgart (DE)
(72) Erfinder: WALCH, Bert, 91126 Schwabach (DE)
(86) Internationale Anmeldenummer: PCT/EP2011/066394
(87) Internationale Veröffentlichungsnummer: WO 2012/062507

(56) Entgegenhaltungen:
- EP-A2- 0 459 575
- WO-A2-2007/125026
- DE-A1- 10 221 498

## Beschreibung

Die Erfindung betrifft ein Verfahren zur Herstellung eines kapazitiven Speicherelements mit einem Schichtsystem auf einer Seite eines porösen Trägers, der als leitfähiger Träger ausgebildet ist oder zumindest auf der einen Seite eine leitfähige Oberflächenschicht aufweist, wobei das Schichtsystem eine Schichtfolge aus einer dielektrischen Titanatschicht und einer elektrisch leitfähigen Schicht aufweist. Die Erfindung betrifft weiterhin ein kapazitives Speicherelement für einen elektrischen Energiespeicher zur Energieversorgung eines Elektro- oder Hybridantriebs eines Kraftfahrzeugs sowie dessen Verwendung als Speicherelement eines elektrischen Energiespeichers zur Energieversorgung eines Elektro- oder Hybridantriebs eines Kraftfahrzeugs.

### Stand der Technik

Ein derartiges Verfahren zur Herstellung eines kapazitiven Speicherelements sind bekannt. Die Offenlegungsschrift DE 102 21 498 A1 offenbart ein Verfahren zur Herstellung eines Kondensators mit einem inerten, porösen Formkörper, auf den eine erste elektrisch leitende Schicht, eine Bariumtitanat-Schicht und darauf eine elektrisch leitende Schicht aufgebracht ist.

Da der als Formkörper ausgebildete Träger eines derartigen kapazitiven Speicherelements jedoch porös ist, ist insbesondere die Ausbildung der Titanatschicht als durchgehend ausgebildete Schicht mit einer eine hinreichende Spannungsfestigkeit gewährleistenden Dicke nicht einfach zu erreichen, da sich das Titanat bevorzugt in den Vertiefungen des porösen Trägers anlagert während die herausragenden Teile des porösen Trägers vom Titanat unbedeckt bleiben oder nur unzureichend bedeckt werden.

Die minimale lokale Dicke der Titanatschicht, also die Dicke dieser Schicht an deren dünnster Stelle, bestimmt im Allgemeinen die Spannungsfestigkeit des kapazitiven Speicherelements. Daher ist für die jeweilige Anwendung des Speicherelements eine entsprechende lokale Mindestdicke der Titanatschicht nötig. Gleichzeitig sollte jedoch der schichtartige Charakter der Titanatschicht gewährleistet sein, also das Verhältnis aus den Schichtdicken an der Stelle mit der größten und der kleinsten Schichtdicke nicht zu groß sein.

Eine bevorzugte Anwendung elektrischer Speicherelemente wie zum Beispiel elektrochemischer Speicherelemente oder kapazitiver Speicherelemente ist die Verwendung als Speicherelemente eines elektrischen Energiespeichers zur Energieversorgung eines Elektro- oder Hybridantriebs eines Kraftfahrzeugs. Zum Betreiben des elektrischen Antriebsstrangs eines Elektro- oder Hybridantriebs eines Kraftfahrzeugs wird ein elektrischer Energiespeicher mit Speicherelementen (Speicherzellen) benötigt, der einerseits ein begrenztes Gewicht aufweist, um im Fahrzeug mitgeführt zu werden und andererseits eine hinreichend hohe Energiemenge speichern kann, um die übliche Reichweite eines Kraftfahrzeugs, wie zum Beispiel eines Personenkraftwagens, zu gewährleisten. Als die effektivsten elektrischen Energiespeicher gelten derzeit als wiederaufladbare Batterien beziehungsweise Akkumulatoren mit Lithium-Ionen-Zellen ausgebildete elektrochemische Energiespeicher. Die entsprechenden Lithium-Ionen-Batterien besitzen derzeit eine Energiedichte von weniger als 0.2 kWh/kg. Weitere Auswahlkriterien zur Wahl des Energiespeichertyps sind neben der Energiedichte vor allem die Lebensdauer, die notwendige Spitzenleistung und der energetische Wirkungsgrad. Weiterhin sind auch die Kosten und die Umweltverträglichkeit entscheidend bei der Wahl des Energiespeichertyps.

Da die Energiespeicher zur Energieversorgung eines Elektro- oder Hybridantriebs eines Kraftfahrzeugs mit einer relativ hohen Ladespannung von etwa 400 Volt bis 600 Volt geladen werden, müssen die einzelnen Speicherelemente (Speicherzellen) - je nach ihrer Verschaltung innerhalb des Energiespeichers-eine entsprechende Spannungsfestigkeit (Durchschlagsfestigkeit) aufweisen. Diese hängt bei den vorgenannten kapazitiven Speicherelementen maßgeblich von der minimalen lokale Dicke der Titanatschicht ab.

### Offenbarung der Erfindung

Beim erfindungsgemäßen Verfahren wird zur Ausbildung einer geschlossenen Titanatschicht mit einstellbarer minimaler Schichtdicke ein externes elektrisches Feld in Richtung der Schichtfolge angelegt und bei angelegtem Feld ein Fluid mit darin befindlichen Titanatteilchen auf den Träger aufgebracht. Das erfindungsgemäße Verfahren mit den in Anspruch 1 genannten Merkmalen hat den Vorteil, dass sich die Titanatteilchen an den herausragenden Stellen (beziehungsweise herausragenden Bereichen) des porösen Trägers konzentrieren, da sich dort aufgrund der Form des Trägers und dessen dielektrischen Eigenschaften eine höhere Feldliniendichte des elektrischen Feldes ergibt. Weiterhin kann durch das Verfahren der schichtartige Charakter der Titanatschicht mit relativ geringem Aufwand gewährleistet werden, also ein Verhältnis aus den Schichtdicken an der Stelle mit der größten und der kleinsten Schichtdicke erreicht werden, das nicht allzu groß ist.

Während des Auftbringens der in dem Fluid gelösten Titanatteilchen wird das elektrische Feld quer, insbesondere senkrecht zur Schichtebene der Schicht(en) angelegt. Damit soll erreicht werden, dass sich das Titanat möglichst an den Orten größter elektrischer Feldliniendichte konzentriert. Dies sichert einen Schichtaufbau, der keine kritisch dünnen Stellen an Spitzen oder erhabenen Stellen des Trägers hinterlässt. Damit wird erreicht, dass die Schichtdicke der Titanatschicht hinreichend gleichmäßig bezüglich der elektrischen Feldverteilung aufgebracht wird. Dies ermöglicht ein möglichst gutes Ausgleiten des Trägergebirges um die hohe Flächenzahl zu erhalten.

Gemäß einer bevorzugten Ausführungsform der Erfindung ist vorgesehen, dass das Speicherelement ein Speicherelement für einen elektrischen Energiespeicher zur Energieversorgung eines Elektro- oder Hybridantriebs eines Kraftfahrzeugs ist, wobei die Schichtdicke der geschlossenen Titanatschicht an jeder Stelle der Schicht auf eine Dicke D von 0.2 µm oder größer 0.2 µm eingestellt wird. Bei einem Speicherelement, dessen Schichtsystem eine Titanatschicht mit einer Schichtdicke D mit 0.2 µm ≤ D ≤ 2.0 µm aufweist, ist für einen elektrischen Energiespeicher zur Energieversorgung eines Elektro- oder Hybridantriebs eines Kraftfahrzeugs besonders gut geeignet, da es die Eigenschaften (a) Spannungsfestigkeit für Spannungen von 400 - 600 Volt bei (b) hoher Energiedichte vereint, denn es gilt allgemein für die Kapazität C: C = E * A/d.

Gemäß einer weiteren bevorzugten Ausführungsform der Erfindung ist vorgesehen, dass die sich ausbildende geschlossene Titanatschicht bei weiterhin angelegtem Feld anschließend auf 700 °C bis 900 °C erhitzt wird. Durch das Erhitzen wird eine stabile und langlebige Titanatschicht geschaffen.

Insbesondere ist die Abfolge der folgenden Verfahrensschritte vorgesehen: (i) Bereitstellen des porösen Trägers, danach (ii) Ausbilden der geschlossenen Titanatschicht auf der einen Seite des Trägers und danach (iii) Aufbringen der elektrisch leitfähigen Schicht auf der Titanatschicht.

Bevorzugt ist vorgesehen, dass der Träger mit der leitfähigen Oberflächenschicht auf der einen Seite durch Aufbringen einer leitfähigen Schicht auf eine Seite eines porösen Körpers gebildet wird. Der poröse Körper ist insbesondere ein poröser Keramik- oder Aktivkohlekörper. Diese Materialien weisen von sich aus bereits hinreichend viele und entsprechend dimensionierte Poren auf. Alternativ ist bevorzugt vorgesehen, dass der leitfähige Träger aus einem leitfähigen porösen Keramikkörper oder aus einem Aktivkohlekörper gebildet ist. Diese Materialien weisen selbst bereits eine hinreichend hohe Leitfähigkeit auf.

Insbesondere ist die Titanatschicht eine Bariumtitanatschicht. Bei einem Speicherelement mit Bariumtitanatschicht sind Energiedichten von etwa 5.5 kWh/Liter erreichbar. Dies entspricht in etwa der halben Energiedichte von Heizöl.

Gemäß einer bevorzugten Ausführungsform der Erfindung ist vorgesehen, dass das Fluid eine flüchtige Flüssigkeit, insbesondere ein Alkohol ist.

Offenbart wird zu dem ein kapazitives Speicherelement bei dem die Titanatschicht als eine geschlossene Titanatschicht aus Titanatteilchen ausgebildet ist, wobei die Schichtdicke D der Titanatschicht an jeder Stelle der Schicht ≥ 0.2 µm ist. Bei einem Speicherelement, dessen Schichtsystem eine Titanatschicht mit einer Schichtdicke D mit 0.2 µm ≤ D ≤ 2.0 µm aufweist, ist für einen elektrischen Energiespeicher zur Energieversorgung eines Elektro- oder Hybridantriebs eines Kraftfahrzeugs besonders gut geeignet, da es die Eigenschaften (a) Spannungsfestigkeit für Spannungen von 400 - 600 Volt bei (b) hoher Energiedichte vereint.

Das kapazitive Speicherelement ist insbesondere ein nach dem zuvor genannten Verfahren hergestelltes Speicherelement. Die Titanatschicht eines derartigen Speicherelements zeichnet sich durch eine charakteristisch hohe Teilchendichte und Anordnung dieser Teilchen an den herausragenden Bereichen (Stellen) des Trägers aus.

Die Titanatschicht ist insbesondere eine Bariumtitanatschicht. Bei einem Speicherelement mit Bariumtitanatschicht sind Energiedichten von etwa 5.5 kWh/Liter erreichbar.

Bevorzugt ist vorgesehen, dass der Träger mit der leitfähigen Oberflächenschicht auf der einen Seite ein durch Aufbringen eines leitfähigen Films auf einen porösen Körper, insbesondere einen porösen Keramik- oder Aktivkohlekörper, gebildeter Träger ist. Diese Materialien weisen von sich aus bereits hinreichend viele und entsprechend dimensionierte Poren auf. Alternativ ist bevorzugt vorgesehen, dass der leitfähige Träger ein leitfähiger porösen Keramikkörper oder eine Aktivkohlekörper ist. Diese Materialien weisen selbst bereits eine hinreichend hohe Leitfähigkeit auf.

Offenbart wird weiterhin eine Verwendung eines kapazitiven Speicherelements, insbesondere eines zuvor genannten Speicherelements, als Speicherelement eines elektrischen Energiespeichers zur Energieversorgung eines Elektro- oder Hybridantriebs eines Kraftfahrzeugs. Es ist vorgesehen, dass das kapazitive Speicherelement einen porösen Träger und ein Schichtsystem auf einer Seite des porösen Trägers aufweist, der Träger als leitfähiger Träger ausgebildet ist oder zumindest auf der einen Seite eine leitfähige Oberflächenschicht aufweist und das Schichtsystem eine Schichtfolge aus einer dielektrischen Titanatschicht und einer elektrisch leitfähige Schicht aufweist, wobei die Titanatschicht als eine geschlossene Titanatschicht aus Titanatteilchen ausgebildet ist, deren Schichtdicke D an jeder Stelle der Titanatschicht ≥ 0.2 µm ist.

Wenn man annimmt, dass 15 kWh für 100 km Fahrleistung eines Kraftfahrzeugs mit Elektroantrieb nötig sind, so benötigt man - ausgehend von der LithiumIonen-Batterie als elektrischem Energiespeicher - ein Batteriegewicht von 75kg/100km. Somit wäre bei einem entsprechenden Kraftfahrzeug für eine Reichweite von 500 km ein Batteriegewicht von 350kg nötig. Zudem kostet derzeit ein eine Lithium-Ionen-Batterie pro kWh etwa 1000 Euro. Eine derartige wiederaufladbare Batterie für eine Reichweite von 500 km würde demnach etwa 75.000 Euro kosten. Ein Energiespeicher mit dem zuvor genannten kapazitiven Speicherelement sollte pro kWh erheblich preiswerter sein.

Die zuvor genannten Energiespeicher mit kapazitiven Speicherelementen werden im Bereich der Kraftfahrzeugtechnik derzeit in Energiespeichern zur Speicherung und Wiederverwendung von Bremsenergie genutzt. Kapazitive Speicherelemente wie Kondensatoren sind gegenüber wiederaufladbaren Batterien unempfindlicher für schnelle Lade und Endladezyklen und auch langlebiger als wiederaufladbare Batterien. Bei einem Speicherelement mit Bariumtitanatschicht sind Energiedichten von etwa 5.5 kWh/Liter erreichbar. Ein entsprechender Energiespeicher ist somit zur dauerhaften Energieversorgung eines Elektro- oder Hybridantriebs eines Kraftfahrzeugs sehr gut geeignet.

Die Erfindung wird im Folgenden anhand von einer Abbildung einer Ausführungsvariante des kapazitiven Speicherelements näher erläutert. Es zeigen
- Fig. 1: den Aufbau und die Schichtfolge eines Speicherelements in einer schematischen Darstellung und
- Fig. 2: den Aufbau und die Schichtfolge eines Speicherelements in einer schematischen Darstellung.

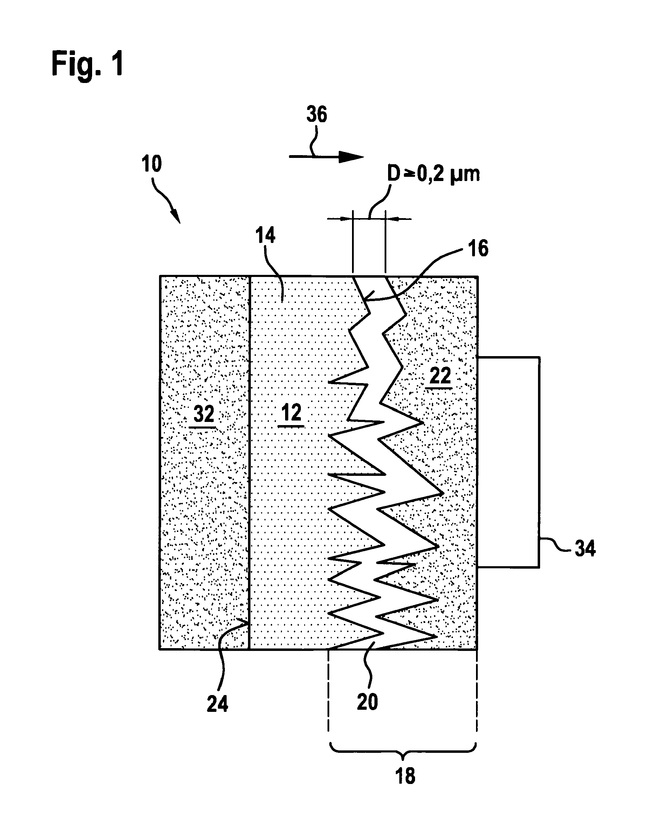

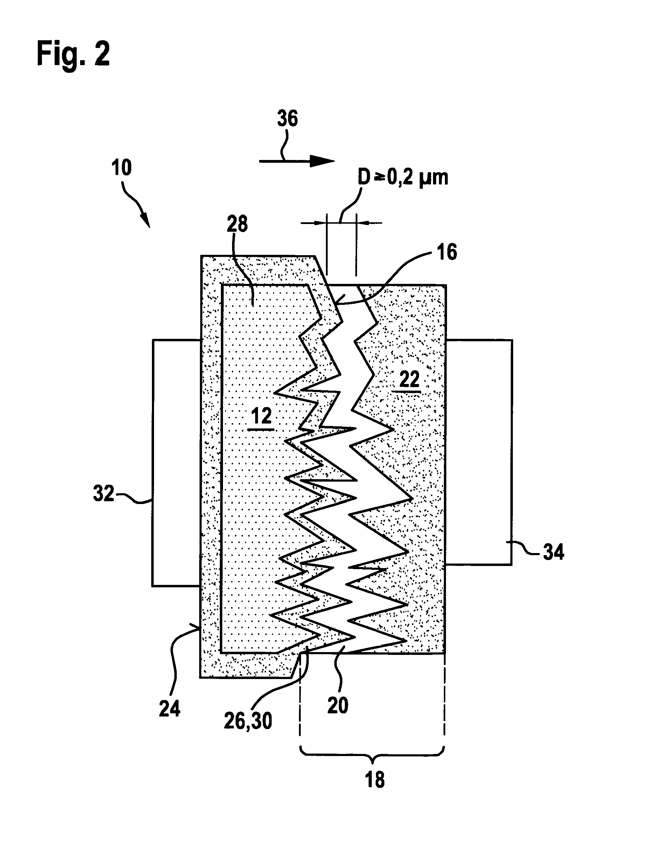

Die Fig. 1 zeigt ein kapazitives Speicherelement 10 mit einem porösen Träger 12 und einem Schichtsystem 18 auf einer Seite 16 des porösen Trägers 12. Der poröse Träger 12 der Fig. 1 ist als leitfähiger Träger 14 ausgebildet. Ein solcher leitfähiger, poröser Träger 14 ist zum Beispiel ein Aktivkohlekörper. Das Schichtsystem 18 auf der einen Seite 16 des Trägers 12 ist ein Schichtsystem 18, das eine Schichtfolge aus einer geschlossenen dielektrischen Titanatschicht 20 und einer elektrisch leitfähige Schicht 22 aufweist. Der poröse Charakter des Trägers 12 ist in der schematischen Darstellung der Figuren 1 und 2 lediglich auf der der dielektrischen Titanatschicht 20 und der elektrisch leitfähigen Schicht 22 zugewandten einen Seite 16 gezeigt, ist jedoch prinzipiell auch auf einer der einen Seite 16 gegenüberliegenden anderen Seite 24 des Trägers 12 vorhanden.

Die Fig. 2 zeigt ebenfalls ein kapazitives Speicherelement 10 mit einem porösen Träger 12 und einem Schichtsystem 18 auf der einen Seite 16 des porösen Trägers 12. Der poröse Träger 12 der Fig. 2 weist jedoch vollumfänglich eine leitfähige Oberflächenschicht 26 auf und ist somit ein Träger 12, der zumindest auf der einen Seite 16 eine leitfähige Oberflächenschicht 26 aufweist. Ein solcher Träger 12, der zumindest auf der einen Seite 16 eine leitfähige Oberflächenschicht 26 aufweist, umfasst zum Beispiel einen porösen Körper 28, auf dessen Seitenfläche(n) ein leitfähiger Film 30 aufgebracht ist. Das Schichtsystem 18 auf der einen Seite 16 des Trägers 12 ist ebenfalls ein Schichtsystem 18, das eine Schichtfolge aus einer geschlossenen dielektrischen Titanatschicht 20 und einer elektrisch leitfähige Schicht 22 aufweist.

Der leitfähige poröse Träger 14 beziehungsweise die leitfähige Oberflächenschicht 26 des Trägers 12 mit besagter Oberflächenschicht 26 sowie die elektrisch leitfähige Schicht 22 sind jeweils mit einer zugeordeten Elektrode 32, 34 des Speicherelements 10 elektrisch leitend verbunden. Die Elektroden 32, 34 dienen der elektrischen Kontaktierung des kapazitiven Speicherelements 10. Mittels dieser Elektroden 32, 34 werden mehrere Speicherelemente 10 in Parallel- und/oder Serienschaltung zu einem Energiespeicher (nicht gezeigt) verschaltet.

Die elektrisch leitfähige Schicht 22 des Schichtsystems 18 und/oder die elektrisch leitfähige Oberflächenschicht 26 des Trägers 12 ist/sind insbesondere als Metallschicht(en) ausgebildet. Der poröse Träger 12 ist insbesondere aus einer intrinsisch porösen Keramik oder aus einem Aktivkohlekörper gebildet oder weist zumindest eine solche intrinsisch poröse Keramik oder einen solchen Aktivkohlekörper auf. Die geschlossene Titanatschicht 20 ist bevorzugt eine geschlossene Bariumtitanatschicht (Bariumtitanat: BaTiO₃). Bariumtitanat gehört zur Gruppe der Elektrokeramiken. Bariumtitanat ist ein Ferroelektrikum und zeigt eine ausgeprägte Hystereseschleife. Wie alle Ferroelektrika besitzt es eine hohe relative Dielektrizitätskonstante von über 2.000. Alternativ können auch andere Titanate mit hoher Dielektrizitätskonstante verwendet werden.

Der poröse Träger 12 hat eine spezifische Oberfläche (BET Oberfläche) von 0.1 bis 20 m²/g, bevorzugt 0,5 bis 10 m²/g, besonders bevorzugt 1 bis 5 m²/g, mit einem Porenanteil von 10 bis 90 Vol.-%, bevorzugt 30 bis 85 Vol.-%, besonders bevorzugt 50 bis 80 Vol.-% und Porenweiten von 0,01 bis 100 µm, bevorzugt 0,1 bis 30 µm, besonders bevorzugt 1 bis 10 µm. Der Porenanteil des porösen Trägers 12 beträgt 10 - 90 Vol%.

Als poröse Keramikkörper eignen sich Katalysatorträgermaterialien, beispielsweise auf der Basis von Metalloxiden wie Aluminiumoxid, Siliciumdioxid, Titandioxid, Zirkondioxid, Chromoxid oder deren Gemische, bevorzugt Aluminiumoxid, Siliciumdioxid, Titandioxid, Zirkondioxid oder deren Gemische, besonders bevorzugt Aluminiumoxid, Zirkondioxid oder deren Gemische oder Carbiden, bevorzugt Siliciumcarbid.

Die als Bariumtitanatschicht ausgebildete Titanatschicht 20 hat eine relative Dielektrizitätskonstante von etwa 5000.

Die Titanatschicht 20 ist aus Titanatteilchen aufgebaut und weist eine Schichtdicke D auf, die an jeder ihrer Stellen ≥ 0.2 µm ist. Im Gegensatz zu der Schichtdicke der Titanatschicht 20, die vorzugsweise im Bereich von 0.2 µm ≤ D ≤ 2.0 µm gewählt werden sollte, werden die Schichtdicken der elektrisch leitfähigen Schicht 22 und/oder der elektrisch leitfähigen Oberflächenschicht 26 erheblich größer als 0.2 µm gewählt. Insbesondere jeweils größer als 2 µm gewählt.

Beim Verfahren zur Herstellung eines kapazitiven Speicherelements 10 gemäß einer bevorzugten Ausführungsform werden die folgenden Schritte durchgeführt: (i) Bereitstellen des porösen Trägers 12, (ii) Ausbilden der geschlossenen Titanatschicht 20 auf der einen Seite 16 des Trägers 12 und (iii) Aufbringen der elektrisch leitfähigen Schicht 22 auf der geschlossenen Titanatschicht 20.

Zum Ausbilden der geschlossenen Titanatschicht 20 wird während des Auftragens des Titanatpulvers (Korngröße der Titanatteilchen bevorzugt 10 nm - 20 nm), bevorzugt gelöst in Alkohol, ein elektrisches Feld über dem Träger 12 in Richtung der Schichtfolge (Pfeil 36), also quer zu den Schichtebenen angelegt. Damit wird erreicht, dass sich das Titanat möglichst an den Orten größter elektrischer Feldliniendichte konzentriert. Dies sichert einen Schichtaufbau, der keine kritisch dünnen Stellen der geschlossenen Titanatschicht 20 an Spitzen oder erhabenen Stellen des porösen Trägers 12 hinterlässt. Damit wird erreicht, dass die Schichtdicke D der Titanatschicht 20 hinreichend gleichmäßig bezüglich der elektrischen Feldverteilung aufgebracht wird. Wichtig ist dabei ein möglichst gutes Ausgleiten des Trägergebirges um die hohe Flächenzahl zu erhalten.

Das externe elektrische Feld kann zum Beispiel mittels eines externen Plattenkondensators angelegt werden, wobei die das Schichtsystem 18 (beziehungsweise der bis dahin erstellte Schichtaufbau des Schichtsystems 18) einschließenden Platten dieses Plattenkondensators parallel oder im Wesentlichen parallel zu den Schichten des Schichtsystems 18 ausgerichtet sind (nicht gezeigt). Weiterhin kann das externe elektrische Feld auch mittels eines Kondensators ausgebildet werden, der vom zumindest auf der einen Seite 26 leitfähigen Träger 12 und einer bevorzugt flächig ausgebildeten Gegenelektrode gebildet ist.

Alternativ nutzt man eine leitende Flüssigkeit - ähnlich wie bei Elektrolytkondensatoren -, um auch in den Poren eine gute senkrechte Ausbildung des elektrischen Feldes zu erreichen. Diese Flüssigkeit kann dann nach dem Stabilisierungsvorgang wieder ausgewaschen oder Verdampft werden.

Dieses Schichtsystem 18 (beziehungsweise der bis dahin erstellte Schichtaufbau des Schichtsystems 18) erhitzt man anschließend bei Interatmosphäre auf 700 bis 900 Grad Celsius, möglichst unter Beibehaltung des elektrischen Feldes zur Stabilisierung der Titanatschicht 20. Danach wird dann auf die Titanatschicht 20 die leitfähige Schicht 22 aufgebracht. Diese leitfähige Schicht 22 ist insbesondere eine Metallschicht (zum Beispiel eine Kupferschicht). Das Aufbringen der elektrisch leitfähigen Schicht 22 (wie auch das Aufbringen der elektrisch leitfähigen Oberflächenschicht beim Speicherelement der Fig. 2) erfolgt durch ein Beschichtungsverfahren wie beispielsweise durch Gasphasenabscheidung (chemische Gasphasenabscheidung: CVD oder physikalische GasphasenabscheidungPVD).

Ein Aufwickeln des Schichtsystems 18 wird nicht empfohlen. Das kapazitive Speicherelement 10 wird wie gesagt im Schichtaufbau erstellt.

## Patentansprüche

1. Verfahren zur Herstellung eines kapazitiven Speicherelements (10) mit einem Schichtsystem (18) auf einer Seite (16) eines porösen Trägers (12), der als leitfähiger Träger (14) ausgebildet ist oder zumindest auf der einen Seite (16) eine leitfähige Oberflächenschicht (26) aufweist, wobei das Schichtsystem (18) eine Schichtfolge aus einer dielektrischen Titanatschicht (20) und einer elektrisch leitfähigen Schicht (22) aufweist, **dadurch gekennzeichnet, dass** zur Ausbildung einer geschlossenen Titanatschicht (20) mit einstellbarer minimaler Schichtdicke (D) ein externes elektrisches Feld in Richtung der Schichtfolge angelegt wird und bei angelegtem Feld ein Fluid mit darin befindlichen Titanatteilchen auf dem Träger (12) aufgebracht wird.

2. Verfahren nach Anspruch 1, **dadurch gekennzeichnet, dass** das Speicherelement (10) ein Speicherelement für einen elektrischen Energiespeicher zur Energieversorgung eines Elektro- oder Hybridantriebs eines Kraftfahrzeugs ist, wobei die Schichtdicke (D) der geschlossenen Titanatschicht (20) an jeder Stelle der Schicht auf ≥ 0.2 µm eingestellt wird.

3. Verfahren nach Anspruch 1 oder 2, **dadurch gekennzeichnet, dass** die sich ausbildende geschlossene Titanatschicht (20) bei weiterhin angelegtem Feld anschließend auf 700 °C bis 900 °C erhitzt wird.

4. Verfahren nach einem der vorhergehenden Ansprüche, **gekennzeichnet durch** die folgenden Schritte:
- Bereitstellen des porösen Trägers (12),
- Ausbilden der geschlossenen Titanatschicht (20) auf der einen Seite (16) des Trägers (12) und
- Aufbringen der elektrisch leitfähigen Schicht (22) auf der geschlossenen Titanatschicht (20).

5. Verfahren nach einem der vorhergehenden Ansprüche, **dadurch gekennzeichnet, dass** der Träger (12) mit der leitfähigen Oberflächenschicht (26) auf der einen Seite (16) durch Aufbringen eines leitfähigen Films (30) auf die eine Seite eines porösen Körpers (28), insbesondere eines porösen Keramik- oder Aktivkohlekörpers gebildet wird.

6. Verfahren nach einem der Ansprüche 1 bis 4, **dadurch gekennzeichnet, dass** der leitfähige Träger (14) aus einem leitfähigen porösen Keramikkörper oder aus einem Aktivkohlekörper gebildet ist.

7. Verfahren nach einem der vorhergehenden Ansprüche, **dadurch gekennzeichnet, dass** die Titanatschicht (20) eine Bariumtitanatschicht ist.

8. Verfahren nach einem der vorhergehenden Ansprüche, **dadurch gekennzeichnet, dass** das Fluid eine Flüssigkeit, insbesondere ein Alkohol ist.

## Claims

1. Method for production of a capacitive storage element (10) with a layer system (18) on one side (16) of a porous carrier (12), which is designed as a conductive carrier (14) or has a conductive surface layer (26) at least on the one side (16), wherein the layer system (18) has a layer sequence consisting of a dielectric titanate layer (20) and an electrically conductive layer (22), **characterized in that**, in order to form a closed titanate layer (20) having an adjustable minimum layer thickness (D), an external electric field is applied in the direction of the layer sequence and, when the field is applied, a fluid with titanate particles located therein is applied to the carrier (12).

2. Method according to Claim 1, **characterized in that** the storage element (10) is a storage element for an electrical energy store for supplying energy for an electric or hybrid drive of a motor vehicle, wherein the layer thickness (D) of the closed titanate layer (20) is adjusted to ≥ 0.2 µm at each point of the layer.

3. Method according to Claim 1 or 2, **characterized in that** the closed titanate layer (20) which forms is subsequently heated to 700°C to 900°C as the field continues to be applied.

4. Method according to one of the preceding claims, **characterized by** the following steps:
- providing the porous carrier (12),
- forming the closed titanate layer (20) on the one side (16) of the carrier (12), and
- applying the electrically conductive layer (22) to the closed titanate layer (20).

5. Method according to one of the preceding claims, **characterized in that** the carrier (12) with the conductive surface layer (26) on the one side (16) is formed by applying a conductive film (30) to the one side of a porous body (28), in particular a porous ceramic body or activated carbon body.

6. Method according to one of Claims 1 to 4, **characterized in that** the conductive carrier (14) is formed from a conductive porous ceramic body or from an activated carbon body.

7. Method according to one of the preceding claims, **characterized in that** the titanate layer (20) is a barium titanate layer.

8. Method according to one of the preceding claims, **characterized in that** the fluid is a liquid, in particular an alcohol.

## Revendications

1. Procédé de fabrication d'un élément capacitif d'accumulation (10) présentant un système (18) de couches sur un côté (16) d'un support poreux (12) configuré comme support conducteur (14) ou présentant une couche conductrice de surface (26) au moins sur un côté (16),
le système (18) de couches présentant une succession de couches constituée d'une couche diélectrique (20) en titanate et d'une couche électriquement conductrice (22),
**caractérisé en ce que**
pour former une couche fermée (20) de titanate dont l'épaisseur minimale (D) puisse être réglée, on applique un champ électrique externe en direction de la succession de couches et pendant que le champ est appliqué, on applique sur le support (12) un fluide qui contient des particules de titanate.

2. Procédé selon la revendication 1, **caractérisé en ce que** l'élément d'accumulation (10) est un élément d'accumulation pour accumulateur électrique servant à alimenter en énergie la partie électrique ou hybride d'un véhicule automobile, l'épaisseur (D) de la couche fermée (20) de titanate étant ajustée en chaque emplacement de la couche à ≥ 0,2 µm.

3. Procédé selon les revendications 1 ou 2, **caractérisé en ce que** la couche fermée (20) de titanate qui se forme lorsque le champ électrique est appliqué est ensuite chauffée entre 700°C et 900°C.

4. Procédé selon l'une des revendications précédentes, **caractérisé par** les étapes suivantes :
préparation du support poreux (12),
formation de la couche fermée (20) de titanate sur un côté (16) du support (12) et
application de la couche électriquement conductrice (22) sur la couche fermée (20) de titanate.

5. Procédé selon l'une des revendications précédentes, **caractérisé en ce que** le support (12) doté de la couche conductrice (26) de surface est formé sur un côté (16) par application d'un film conducteur (30) sur un côté d'un corps poreux (28) et en particulier d'un corps poreux en céramique ou en charbon actif.

6. Procédé selon l'une des revendications 1 à 4, **caractérisé en ce que** le support conducteur (14) est formé d'un corps céramique conducteur poreux ou d'un corps en charbon actif.

7. Procédé selon l'une des revendications précédentes, **caractérisé en ce que** la couche (20) de titanate est une couche de titanate de baryum.

8. Procédé selon l'une des revendications précédentes, **caractérisé en ce que** le fluide est un liquide et en particulier un alcool.
